# EUROPEAN PATENT APPLICATION

(11) **EP 1 342 408 A1**
(43) Date of publication of application: **10.09.2003**
(21) Application number: 02425133.2
(22) Date of filing: 08.03.2002
(51) Int. Cl.: A01K 15/02, A23K 1/00, A23K 1/16, A23K 1/18

(54) **Chewable toy for animals**

(71) Applicant: Ciuffo Gatto S.r.L., 10138 Torino (IT)
(72) Inventor: Leo, Franca, 10138 Torino (IT)
(74) Representative: Gerbino, Angelo

(57) **Abstract**

The chewable toy for animals can be produced by the moulding into a desired configuration of a mixture comprising:
- 100 parts by weight of a degradable polymeric composition comprising a starchy material and a degradable ethylene copolymer,
- from 5 to 30 parts by weight of isomalt, and
- from 0.5 to 5 parts by weight of garlic or derivatives thereof.

## Description

The present invention relates to a chewable toy for animals, particularly domestic pets such as, for example, dogs, cats, rodents, and birds.

It is known that these animals like to play with various articles to be found in the domestic environment, licking them and gnawing them. Upon the basis of this observation, in recent years, chewable toys have been produced which can attract the animals' attention in preference to domestic articles which may be dangerous owing to the fact that they contain hazardous substances or the like. An example of a known chewable toy is described, for example, in the Applicant's patent US 5 419 283.

The object of the present invention is to provide a chewable toy for animals, the consumption of which actively helps to keep the animal in good health, with reference, in particular, to oral hygiene and to the care of the teeth.

This object is achieved by a chewable toy for animals which can be produced by the moulding into a desired configuration of a mixture comprising:
- 100 parts by weight of a degradable polymeric composition comprising a starchy material and a degradable ethylene copolymer,
- from 5 to 30 parts by weight of isomalt, and
- from 0.5 to 5 parts by weight of garlic or derivatives thereof.

Isomalt is a hydrogenated isomaltolose consisting of approximately equal parts of the isomers 1-O-α-D-glucopyranosyl-D-manitol dihydrate and 6-O-α-D-glucopyranosyl-D-sorbitol. The commercially available isomalt is an artificial sweetener produced by a two-stage process, of which the first stage provides for the enzymatic rearrangement of sucrose to isomaltolose and the second stage provides for the hydrogenation of the latter with hydrogen and Raney nickel.

Consumption of the chewable toys of the invention by animals prevents the consequences of incorrect dietary habits.

In fact, the owners of domestic pets often give them ordinary sweets so that they become accustomed to sweet-flavoured food, which causes serious renal, hepatic and gastroenteric imbalances. In this connection, the toxic action exerted on the organism by the theobromine contained in cocoa and in plain chocolate may be mentioned.

The composition containing isomalt in accordance with the present invention, on the other hand, does not cause any of these damaging effects, whilst satisfying the palate of an animal accustomed to sweet flavours. At the same time, the composition containing isomalt helps to prevent damage to the animal's teeth since the bacteria present in the mouth cannot utilize this substance as a source of energy for the production of caries. Moreover, isomalt reduces the formation of dental plaque and helps to construct dental enamel. It is also digested by the enzymes in much smaller quantity and much more slowly than ordinary sugar. The blood-sugar and insulin levels do not therefore undergo significant changes as a result of its consumption, in contrast with what occurs after the consumption of ordinary sugar.

Garlic and its derivatives constitute an ingredient useful for the mixture of the toy of the invention, owing to their vitamin B1, B2 and C content, as well as their antiseptic, invigorating, stimulating, and vermifugal properties.

Preferably, garlic derivatives which do not impart unpleasant odours to the breath after their ingestion, for example, those which can be produced in accordance with the method described in EP-538 708, the content of which is incorporated herein by reference, are used. In summary, such a derivative is a powder which can be produced as a result of the formation of a suspension of garlic bulbs in water in a ratio by weight within the range between 1:2 and 1:5, and subsequent lyophilization of the suspension with a preliminary stage of cooling to -50°C for from 4 to 8 hours, followed by a heating stage having a duration of between 12 and 24 hours, to a temperature no greater than 50°C.

Chewable toys according to the invention have also been found surprisingly effective in preventing the development of bacteria such as salmonella in dogs which regularly consume them.

In preferred embodiments of the invention, the above-mentioned mixture comprises from 10 to 20 parts by weight of isomalt and/or from 1 to 3 parts by weight of garlic or its derivatives per 100 parts by weight of degradable polymeric composition.

Advantageously, a starchy material selected from the group consisting of starch (for example, maize and/or potato starch), hydrolyzed starch, starch dextrin and mixtures thereof, and a degradable ethylene copolymer selected from the group consisting of poly(ethylene-acrylic acid), poly(ethylene-vinyl alcohol) and mixtures thereof are used in the above-mentioned polymeric composition. The ratio by weight between the ethylene copolymer and the starchy material is preferably within the range between 1:6 and 2:1 and even more preferably within the range between 1.6 and 1.1.

The above-mentioned polymeric composition may also include a plasticizer, for example, selected from the group consisting of glycerol, sorbitol, sorbitan, manitol, maltitol, hydrogenated starch syrup, sucrose, maltose, fructose, and mixtures thereof, preferably in quantities of between 10% and 40% by weight.

Advantageously, the mixture of the toy of the invention also comprises from 1 to 20, and preferably from 5 to 10, parts by weight of chestnut flour per 100 parts by weight of degradable polymeric composition.

Chestnut flour is prepared from fresh chestnuts which are dried for a period of 10-15 days and are then peeled to remove the outer skin which covers the kernel and finally, are pulverized in crushing mills.

The chestnut flour thus obtained is substantially gluten-free and is rich in natural sugars, with an energy value of about 1300-1400 kJ/100 g. It also contains gelling substances which are stable in an acid environment.

The presence of the chestnut flour confers on the mixture used for the chewable toy of the invention astringent, demineralizing and invigorating properties, as well as a considerable energy value which renders it particularly suitable for working dogs such as rescue dogs and sleigh-dogs.

The mixture of the toy of the invention also advantageously comprises from 0.5 to 3, and preferably from 1 to 2, parts by weight of sodium hexametaphosphate per 100 parts by weight of degradable polymeric composition.

This ingredient develops an effective synergic action together with the isomalt, so as to reduce further the formation of tartar in dogs which consume chewable toys made from mixtures of this type.

The mixture used to produce the chewable toy of the invention may also comprise from 5 to 30, and preferably from 15 to 20, parts by weight of ground raw animal hide per 100 parts by weight of degradable polymeric composition. This ingredient renders the toy of the invention more appetizing to animals used to eating chewable toys based on animal hides. As an alternative to the use of ground animal hides, the use of hide aroma in quantities of between 0.01 and 1 part by weight per 100 parts by weight of degradable polymeric composition may be considered.

A further optional ingredient of the mixture used for the production of the chewable toy of the invention is constituted by sage in quantities of between 0.5 and 3 parts by weight per 100 parts by weight of degradable polymeric composition.

The mixtures described above can be processed by standard methods and techniques used for the processing of thermoplastic materials. For example, the chewable toy of the invention can be produced by injection moulding of a mixture of the ingredients indicated above with the use of a mould which enables the desired final shape to be produced.

Advantageously, a toy intended for dogs is bone-shaped and one intended for cats is fish-shaped or mouse-shaped.

Further advantages and characteristics of the present invention will become clear from the following examples.

### EXAMPLE 1

A mixture comprising the following ingredients in the quantities indicated was prepared:

| | |
|---|---|
| - biodegradable polymeric composition comprising maize starch and poly(ethylene-vinyl alcohol) | 100 parts by weight |
| - isomalt | 20 parts by weight |
| - garlic powder produced in accordance with the method of EP-538 708 | 1 part by weight. |

This mixture was loaded into the hopper of a conventional injection moulding machine and was injected into a mould reproducing the shape of a bone in negative form. The moulding cycle time was about 45 s and the moulding temperature was between 90 and 100°C. Upon completion of the moulding process, a bone-shaped chewable toy was produced.

### EXAMPLES 2-6

Bone-shaped chewable toys were produced by a method similar to that followed for Example 1, the composition of the starting mixture being varied each time as indicated in Table 1, in which the data is given as parts by weight.

**TABLE 1**

| EXAMPLE | 2 | 3 | 4 | 5 | 6 |
|---|---|---|---|---|---|
| Polymeric composition comprising starch and an ethylene copolymer | 100 | 100 | 100 | 100 | 100 |
| Isomalt | 18 | 15 | 13 | 20 | 25 |
| Garlic powder (see EP-538 708) | 2 | 1 | 1 | 2 | 0.5 |
| Ground raw hide | 20 | - | - | - | 30 |
| Hide aroma | - | - | - | 0.5 | - |
| Chestnut flour | - | 10 | - | - | 15 |
| Sodium hexametaphosphate - | - | - | 1 | 1 | - |
| Sage | - | 1 | 2 | 1 | 1 |

Naturally, the principle of the invention remaining the same, the details of production and the forms of embodiment may vary widely with respect to those described purely by way of example, without thereby departing from its scope.

## Claims

1. A chewable toy for animals, which can be produced by the moulding into a desired configuration of a mixture comprising:
- 100 parts by weight of a degradable polymeric composition comprising a starchy material and a degradable ethylene copolymer,
- from 5 to 30 parts by weight of isomalt, and
- from 0.5 to 5 parts by weight of garlic or derivatives thereof.

2. A toy according to Claim 1, in which the mixture comprises from 10 to 20 parts by weight of isomalt per 100 parts by weight of degradable polymeric composition.

3. A toy according to any one of the preceding claims, in which the mixture comprises from 1 to 3 parts by weight of garlic or its derivatives per 100 parts by weight of degradable polymeric composition.

4. A toy according to any one of the preceding claims, in which the derivative of garlic is a powder which can be produced as a result of the formation of a suspension of garlic bulbs in water in a ratio by weight within the range between 1:2 and 1:5 and subsequent lyophilization of the suspension with a preliminary stage of cooling to -50°C for from 4 to 8 hours followed by a heating stage with a duration of between 12 and 24 hours, to a temperature no greater than 50°C.

5. A toy according to any one of the preceding claims in which the mixture also comprises from 1 to 20, and preferably from 5 to 10, parts by weight of chestnut flour per 100 parts by weight of degradable polymeric composition.

6. A toy according to any one of the preceding claims, in which the mixture also comprises from 5 to 30, and preferably from 15 to 20, parts by weight of ground raw animal hide per 100 parts by weight of degradable polymeric composition.

7. A toy according to any one of preceding claims 1 to 5, in which the mixture also comprises from 0.01 to 1 part by weight of hide aroma per 100 parts by weight of degradable polymeric composition.

8. A toy according to any one of the preceding claims in which the mixture also comprises from 0.5 to 3, and preferably from 1 to 2, parts by weight of sodium hexametaphosphate per 100 parts by weight of degradable polymeric composition.

9. A toy according to any one of the preceding claims in which the starchy material is selected from the group consisting of starch, hydrolyzed starch, starch dextrin and mixtures thereof.

10. A toy according to any one of the preceding claims, in which the degradable ethylene copolymer is selected from the group consisting of poly(ethylene-acrylic acid), poly(ethylene-vinyl alcohol) and mixtures thereof.

11. A toy according to any one of the preceding claims, in which the ratio by weight between the ethylene copolymer and the starchy material is within the range between 1:6 and 2:1 and, preferably, within the range between 1.6 and 1.1.

12. A toy according to any one of the preceding claims in which the polymeric composition also includes a plasticizer in a quantity of between 10% and 40% by weight, the plasticizer being selected from the group consisting of glycerol, sorbitol, sorbitan, manitol, maltitol, hydrogenated starch syrup, sucrose, maltose, fructose, and mixtures thereof.

13. A toy according to any one of the preceding claims, having the shape of a bone.
